# EUROPEAN PATENT SPECIFICATION

(11) **EP 0 787 164 B1**
(45) Date of publication and mention of the grant of the patent: **12.08.1998**
(21) Application number: 95933377.4
(22) Date of filing: 15.09.1995
(51) Int. Cl.: C08J 9/14

(54) **PROCESS FOR PREPARING RIGID POLYURETHANE FOAMS**
VERFAHREN ZUR HERSTELLUNG VON POLYURETHANHARTSCHAUMSTOFFEN
PROCEDE DE PREPARATION DE MOUSSES POLYURETHANNE RIGIDES

(30) Priority: 19.10.1994 EP 94203038; 27.02.1995 EP 95200475
(43) Date of publication of application: 06.08.1997
(73) Proprietor: IMPERIAL CHEMICAL INDUSTRIES PLC, London SW1P 3JF (GB)
(72) Inventor: BIESMANS, Guy, Leon, Jean, Ghislain, B-3078 Everberg (BE); BARKER, Martin, B-3020 Veltem (BE)
(74) Representative: Swinnen, Anne-Marie
(86) International application number: EP9503640
(87) International publication number: WO9612758

(56) References cited:
- EP-A- 0 388 724
- US-A- 3 586 651

## Description

This invention relates to a process for the preparation of a rigid polyurethane or urethane-modified polyisocyanurate foam.

Rigid polyurethane and urethane-modified polyisocyanurate foams are in general prepared by reacting the appropriate polyisocyanate and isocyanate-reactive compound (usually a polyol) in the presence of a blowing agent. One use of such foams is as a thermal insulation medium in buildings, refrigerators and other domestic appliances.

Industry is constantly looking for lower density rigid polyurethane foam not showing any detrimental effect on other foam properties such as the dimensional stability.
Especially low density (cyclo)alkane blown foams are difficult to obtain.

It is an object of the present invention to provide a process for the preparation of a stable low density rigid polyurethane foam, especially a (cyclo)alkane blown foam, showing satisfactory dimensional stability.

According to the present invention there is provided a process for the preparation of a rigid polyurethane or urethane-modified polyisocyanurate foam by reaction of a polyisocyanate composition with a polyfunctional isocyanate-reactive composition under foam-forming conditions in the presence of a mixture of physical blowing agents, each of said physical blowing agents having a boiling point in the range -40°C to 80°C, characterised in that said physical blowing agent mixture comprises at least 3 components and the foam has a closed cell content of above 85 %, a core density of below 28 kg/m³ and a dimensional stability expressed as the sum of the absolute values of the relative linear changes in the three dimensions after exposure to -20°C for 14 days, of below 15 %.

The closed cell content is measured according to standard ISO DIS 4590. The core density is measured according to standard DIN 53420-78 or ISO 845. The relative linear changes in the three dimensions are measured according to standard ISO 2796 or ISO 1923.

According to a preferred embodiment of the present invention the said rigid polyurethane foam has a core density of below 27 kg/m³, more preferably below 26 or even 25 kg/m³ and most preferably below 22 kg/m³.

According to another preferred embodiment of the present invention the said rigid polyurethane foam has a dimensional stability of below 10 %, preferably below 7.5 %.
Generally a rigid polyurethane foam having a core density of below 20 kg/m³ has a dimensional stability of below 15 %, a rigid polyurethane foam having a core density of below 25 kg/m³ has a dimensional stability of below 10 % and a rigid polyurethane foam having a core density of below 28 kg/m³ has a dimensional stability of below 7.5 %.

The rigid polyurethane foam is especially useful in low temperature applications (of below 5°C).

Preferably the physical blowing agents used in the process of the present invention do not contain halogen atoms.

Preferably at least one of the physical blowing agents used in the process of the present invention has a gas thermal conductivity at the foam operational temperature lower than the gas thermal conductivity of carbon dioxide, more preferably lower than the gas thermal conductivity of n-pentane, most preferably lower than the gas thermal conductivity of cyclopentane.
The foam operational temperature is defined as the lowest temperature to which the foam, during use, is exposed. For example the operational temperature for a foam to be used in a refrigerator is -10°C, in a freezer -25°C.

Preferably the sum of the gas partial pressures of all the blowing agent components (including the physical blowing agents and any CO₂ generated by a chemical blowing agent such as water) is at least 0.3 bar, more preferably at least 0.45 bar and most preferably at least 0.6 bar (1bar = 10⁵ Pa).

Preferably at the foam operational temperature at the most 40 % of the physical blowing agent mixture is condensed, preferably at the most 20 %, more preferably at the most 10 % and most preferably at the most 2 %.

The physical blowing agent mixture for use in the process of the present invention comprises at least 3 components, preferably at least 4 components, especially if the foam is intended for use at low temperatures. Preferably at least one of the components of the physical blowing agent mixture to be used in the process of the present invention is an alkane or a cycloalkane and/or acetone.

Suitable components for use in the present physical blowing agent mixture comprise 2-methylpentane, 3-methylpentane, 1-propionaldehyde, trans-1,3-pentadiene, cis-1,3-pentadiene, 1-pentene-4-yne, 4-methyl-cis-2-pentene, 4-methyl-1-pentene, 1-pentene-3-yne, trans-2-pentene, cis-2-pentene, methyl isocyanate, 1,5-hexadiene, 2,3-pentadiene, 1,2-pentadiene, 1,4-pentadiene, 2-methyl-1-butene, 3,3-dimethyl-1-butene, cyclopentadiene, 1,3-propylene oxide, dimethylacetylene, cyclopentane, cyclopentene, 1-propanal, ethyl formate, glyoxal, 2,3-dimethylbutane, methyl t-butyl ether, vinyl formate, 1-pentyne, methyl isobutyl ether, methyl isopropyl ether, 3-methyl-1,2-butadiene, 3-methyl-1-butyne, methyl n-propyl ether, 2-methyl-2-butene, ethylene imine, furan, divinyl ether, diethyl amine, methylal, 1-pentene, n-pentane, methyl formate, n-propyl amine, acrolein, isopentane, 2,2-dimethylbutane, isopropylmercaptan, dimethylsulfide, tetramethylsilane, 1,2-propylene oxide, methylacetate, 2-methyl-1-butene-3-yne, carbondisulfide, acetaldehyde, acetone, ethylmercaptan, diethyl ether, cyclohexane, methyl cyclopentane, methyl ethyl ketone, sulfur dichloride, tetrachlorosilane, trichlorosilane, bromine, sulfur trioxide, 1,1-dichloro-1-fluoroethane, dimethylchlorosilane, 1,1-difluoroethane, 2-chloropropene, n-propylchloride, t-butylchloride, 1,2-dichloro-1,1,2-trifluoroethane, 1,1-dichloro-2,2,2-trifluoroethane, trans-1,2-dichloroethylene, cis-1,2-dichloroethylene, halothane, cyclobutane, n-hexane, diisopropylether, propargylchloride, trimethylchlorosilane, 2-bromopropane, difluoroethane, ethylene oxide, ethylchloride, perfluoropropane, methyl vinyl ether, perfluorocyclobutane, perfluorobutene, perfluorobutane, chlorine pentafluoride, ethylfluoride, dimethyl ether, cyclopropane, butadiene, cis-butene, trans-butene, methylpropene, cyclobutane, butane, methylpropane, chlorine trifluoride, 1,1,1,2-tetrafluoroethane, 1,1-difluoroethane, chloroprene, 1,2-dibromotetrafluoroethane, chloromethyl methyl ether, 3-chloropropene, 1,1,2-trichlorotrifluoroethane, trichlorofluoromethane, dibromodifluoromethane, methyldichlorosilane, acetylchloride, 1,1-dichloroethylene, 1,1-dichloroethane, isopropylchloride, dichloromethane, bromoethane, methyliodide, bromochlorodifluoromethane, dichlorodifluoromethane, chlorodifluoromethane, dichlorofluoromethane, bromotrifluoroethylene, chlorotrifluoroethylene, chloropentafluoroethane, dichlorotetrafluoroethane, chlorodifluoroethylene, vinylbromide, vinylchloride, chlorodifluoroethane, hexafluoropropylene, hexafluoroacetone.

Physical blowing agent mixtures for use in the process of the present invention preferably contain alkanes, optionally cycloalkanes, and/or alkenes, optionally cycloalkenes, and/or acetone and/or one or more of the following hydrofluorocarbons: 1,1,1,3,3-pentafluoropropane (HFC 245fa), 1,1,1,2-tetrafluoroethane (HFC 134a), 1,1,1,2,2-pentafluoroethane (HFC 125), 1,1-difluoroethane (HFC 152a), 1,1,1,4,4,4-hexafluorobutane (HFC 356mffm), 1,1,1,2,3-pentafluoropropane (HFC 245eb), 1,1,2,2,3-pentafluoropropane (HFC 245ca), 1,1,1,2,3,3-hexafluoropropane (HFC 236ea), 1,1,1,3,3,3-hexafluoropropane (HFC 236fa), 1,1,1,3,3-pentafluorobutane (HFC 365mfc) and/or perfluorinated alkanes and/or fluorinated ethers especially the isomers of E245 and E356.

Most preferred are physical blowing agent mixtures containing one or more (cyclo)alkanes having 5 to 6 carbon atoms such as cyclopentane, n-pentane, isopentane, 2,2-dimethylbutane, 2-methylpentane, 3-methylpentane, optionally acetone and optionally hydrofluorocarbons.

The relative amounts of each component to be used in the present physical blowing agent mixture is to be determined so as to obtain a suitable level of internal gas pressure (preferably above 0.3 bar) and condensation (preferably at the most 40 % at the foam operational temperature).

Besides the physical blowing agent mixture as described above a chemical blowing agent generating CO₂ such as water, may be used in the process of the present invention.

The total quantity of blowing agent (physical and chemical blowing agents) to be used in the process of the present invention is to be determined so as to obtain a suitable core density (below 28 kg/m³), and will typically be from 2 to 25 % by weight based on the total reaction system.

Particularly preferred blowing agent mixtures for use in the process of the present invention include (amounts are expressed as pbw on the isocyanate-reactive component):
- cyclopentane (3.9), acetone (2.3), 2,2-dimethylbutane (5.2), isopentane (10.5), n-pentane (7.1), 1,1,1,2-tetrafluoroethane (3.3), water (3.9) (referred to hereinafter as MIX 1);
- cyclopentane (3.9), 2,2-dimethylbutane (5.3), 2-methylpentane (3.0), 3-methylpentane (2.6), n-pentane (7.2), isopentane (10.8), water (4.0) (referred to hereinafter as MIX 2);
- cyclopentane (3.3), acetone (2.0), 2,2-dimethylbutane (4.2), isopentane (7.0), water (1.5) (referred to hereinafter as MIX 3);
- cyclopentane (3.2), acetone (2.0), 2,2-dimethylbutane (4.2), isopentane (8.1), water (1.0), 3-methylpentane (1.0) (referred to hereinafter as MIX 4);
- cyclopentane (3.2), acetone (2.0), 2,2-dimethylbutane (4.2), isopentane (1.6), water (2.2), 3-methylpentane (3.0) (referred to hereinafter as MIX 5);
- cyclopentane (3.2), acetone (2.0), isopentane (7.7), water (2.2) (referred to hereinafter as MIX 6);
- cyclopentane (3.9), acetone (2.4), isopentane (9.8), n-pentane (12.0), water (2.0) (referred to hereinafter as MIX 7).
MIX 1 and MIX 2 are especially useful for preparing 25 kg/m³ dense rigid polyurethane foams for use in construction, being exposed to -20°C. MIX 3, MIX 4, MIX 5 and MIX 6 are especially useful for preparing 27-29 kg/m³ dense rigid polyurethane foams for use in appliances, being exposed to -5°C. Another preferred blowing agent mixture for use in the process of the present invention is a mixture containing cyclopentane, isopentane, n-pentane, acetone and 2,2-dimethylbutane in the following mole percentages: 13.8, 36.6, 24.7, 9.8 and 15.2 respectively.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane.

Polyfunctional isocyanate-reactive compositions with which the polyisocyanate composition can be reacted to form rigid polyurethane or urethane-modified polyisocyanurate foams include any of those known in the art for that purpose. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polymeric polyols include polyesters (especially aromatic polyesters) obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes.

The quantities of the polyisocyanate compositions and the polyfunctional isocyanate-reactive compositions to be reacted will depend upon the nature of the rigid polyurethane or urethane-modified polyisocyanurate foam to be produced and will be readily determined by those skilled in the art.

In addition to the polyisocyanate and polyfunctional isocyanate-reactive compositions and the blowing agent mixture of the present invention, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, foam-stabilising agents or surfactants, for example siloxane-oxyalkylene copolymers, urethane catalysts, for example tin compounds such as stannous octoate or dibutyltin dilaurate or tertiary amines such as dimethylcyclohexylamine or triethylene diamine, and fire retardants, for example halogenated alkyl phosphates such as tris chloropropyl phosphate.

According to a particular embodiment of the present invention the process is carried out in the presence of an insoluble fluorinated compound yielding foams having smaller cell sizes and improved thermal insulation. A urethane-modified polyisocyanurate foam (NCO index above 150) made in the presence of such an insoluble fluorinated compound also has improved friability properties.

The term insoluble as used herein with respect to the insoluble fluorinated compound is defined as showing a solubility in either the isocyanate-reactive composition or the polyisocyanate composition with which it is to be blended of less than 500 ppm by weight at 25°C and atmospheric pressure.

Insoluble fluorinated compounds for use in the process of the invention include any of those disclosed in US Patent No. 4,981,879, US Patent No. 5,034,424, US Patent No. 4,972,002, European Patent Applications Nos 0508649 and 0498628 and PCT Patent Application No. 95/18176.

It is preferred to use an insoluble, substantially fluorinated or perfluorinated compound having a boiling point of at least 20°C at atmospheric pressure, and preferably at least 40°C and more preferably at least 60°C, or 80°C or 100°C.

The term substantially fluorinated as used herein with reference to the insoluble, substantially fluorinated compound used in the process of the invention is to be understood to embrace compounds in which at least 50 % of the hydrogen atoms of the unfluorinated compounds are replaced by fluorine.

Suitable compounds include substantially fluorinated or perfluorinated hydrocarbons, substantially fluorinated or perfluorinated ethers, substantially fluorinated or perfluorinated tertiary amines, substantially fluorinated or perfluorinated amino-ethers and substantially fluorinated or perfluorinated sulphones.

Suitable examples of substantially fluorinated or perfluorinated hydrocarbons are those containing from 1 to 15 carbon atoms, which may be either cyclic or acyclic, either aromatic or aliphatic and either saturated or unsaturated, such as substantially fluorinated and perfluorinated methane, ethane, propane, butane, pentane, hexane, heptane, octane, nonane, decane, cyclobutane, cyclooctane, cyclohexane, cyclopentane, cycloheptane, norbornadiene, decaline, dimethylcyclobutane, methylcyclohexane, 1-methyldecaline, phenanthrene, dimethylcyclobutane, and isomers thereof. Particular mention may be made of the various isomers of perfluoropentane and perfluorohexane such as perfluoro-n-pentane and perfluoro-n-hexane and of hexafluoropropene dimers and trimers such as perfluoro(4-methylpent-2-ene).

Certain insoluble fluorinated compounds suitable for use in the process of the invention may themselves act as blowing agents under the conditions pertaining to the foam-forming reaction, particularly where their boiling point is lower than the exotherm temperature achieved by the reaction mixture. For the avoidance of doubt, such materials may, partly or completely, fulfil the function of blowing agent in addition to that of insoluble fluorinated compound.

The amount of the insoluble fluorinated compound used in the process of the present invention ranges from 0.05 to 10 %, preferably from 0.1 to 5 %, most preferably from 0.6 to 2.3 % by weight based on the total foam-forming composition.

The insoluble fluorinated compound will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants are silicone surfactants, fluoro surfactants and/or alkoxylated alkanes.

The amount of emulsifying agent used is between 0.02 and 5 pbw per 100 pbw of foam forming reaction system and between 0.05 and 10 pbw per 100 pbw of polyisocyanate or polyol composition.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

It is convenient in many applications to provide the components for polyurethane production in pre-blended formulations based on each of the primary polyisocyanate and isocyanate-reactive components. In particular, many reaction systems employ a polyisocyanate-reactive composition which contains the major additives such as the blowing agent and the catalyst in addition to the polyisocyanate-reactive component or components.

The various aspects of this invention are illustrated, but not limited by the following examples in which the following ingredients are used:
Polyol A being a PET polyester polyol containing approximately 30 % recycled polyethylene terephthalate, having an approximate functionality of 2.3 and a hydroxyl value of 350 mg KOH/g.
Tegostab B 8408 being a silicone surfactant available from Goldschmidt.
Tegostab B 8406 being a silicone surfactant available from Goldschmidt.
TEP being triethylphosphate.
DMEA being N,N-dimethylaminoethanol.
NIAX A1 being an amine catalyst available from Air Products.
Dabco T 45 being a catalyst available from Air products.
SUPRASEC 2085 being a polyisocyanate available from Imperial Chemical Industries PLC.
DALTOLAC XR 159 being a polyether polyol available from Imperial Chemical Industries PLC.
DALTOLAC XR 144 being a polyether polyol available from Imperial Chemical Industries PLC.
DALTOLAC R 130 being a polyether polyol available from Imperial Chemical Industries PLC.
DALTOLAC P744 being a polyester polyol available from Imperial Chemical Industries PLC.
DALTOREZ XP 805 being a polyester polyol available from Imperial Chemical Industries PLC.
DALTOLAC R 105 being a polyether polyol available from Imperial Chemical Industries PLC.
Tegostab B 8423 being a silicone surfactant available from Goldschmidt. RS 201 being a silicone surfactant available from Union Carbide (Air Products).
RS 210 being a silicone surfactant available from Union Carbide (Air Products).
SR 234 being a silicone surfactant available from OSi.
PFO being perfluoro(4-methylpent-2-ene).
Catalyst SFC being an amine catalyst available from Imperial Chemical Industries PLC.
SUPRASEC DNR being a polyisocyanate available from Imperial Chemical Industries PLC.
SUPRASEC, DALTOLAC and DALTOREZ are trademarks of Imperial Chemical Industries PLC.

### EXAMPLE 1

Construction type rigid polyurethane foams were prepared starting from the formulations indicated in Table 1 as follows.
The polyol blends were mixed and vigorously agitated (by hand shaking or propellor mixing) until a uniform homogeneous blend was obtained or a uniform white emulsion produced. This blend was then mixed with the polyisocyanate using standard foam equipment. The initial temperature of the chemicals was 23°C ± 2°C. Foams were allowed to cure for at least 16 hours at room temperature before physical property measurements.

Of the obtained foams free rise density, dimensional stability after 1 day at -20°C and after 14 days at -20°C and thermal conductivity (initial, after 1 week at 70°C and after 3 weeks at 70°C) were measured. The results are indicated in Table 1 below.

These results show that for foams A and B according to the present invention, in addition to improvements in dimensional stability, thermal conductivity substantially improved compared to the Reference Foam.

**TABLE 1**

| | | Reference Foam | Foam A | Foam B |
|---|---|---|---|---|
| Polyol A | pbw | 100 | 100 | 100 |
| Tegostab B 8408 | pbw | 2 | 2 | 2 |
| Triethylphosphate | pbw | 15 | 15 | 15 |
| DMEA | pbw | 3.6 | 3.6 | 3.6 |
| NIAX Al | pbw | 0.16 | 0.16 | 0.16 |
| Dabco T 45 | pbw | 2.69 | 2.69 | 2.69 |
| water | pbw | 4.1 | | |
| n-pentane | pbw | 30 | | |
| MIX 1 | pbw | | 32.3 | |
| MIX 2 | pbw | | | 32.8 |
| Suprasec 2085 | pbw | 385.87 | 378.14 | 385.87 |
| Density | kg/m³ | 25.3 | 25.5 | 22.1 |
| Dim.Stab. 1 day/-20°C | | | | |
| Length | % | -13.3 | -0.3 | -1.2 |
| Width | % | -8.9 | -0.5 | -1.8 |
| Thickness | % | 0.7 | -0.3 | 0.2 |
| Sum absolute values | | 22.9 | 1.1 | 3.2 |
| Dim.Stab. 14 days/-20°C | | | | |
| Length | % | -12.4 | -0.2 | -5.0 |
| Width | % | -9.8 | 0.5 | -5.8 |
| Thickness | % | 2.4 | 5.1 | 0.7 |
| Sum absolute values | | 24.6 | 5.8 | 11.5 |
| Thermal conductivity | | | | |
| Lambda Initial | mW/mK | 27.1 | 23.7 | 24.6 |
| Lambda 1 week/70°C | mW/mK | 29.4 | 27.0 | 27.9 |
| Lambda 3 week/70°C | mW/mK | 29.7 | 27.4 | 29.1 |

### EXAMPLE 2

Appliance type rigid polyurethane foams were prepared starting from the formulations indicated in Table 2 along the lines described in example 1. of the obtained foams closed cell content (CCC), dimensional stability after 1 day at -20°C and after 14 days at -20°C and thermal conductivity (initial, after 1 week at 70°C, 3 weeks at 70°C and 5 weeks at 70°C) were measured. The results are indicated in Table 2 below.

**TABLE 2**

| | | Ref. | Foam E |
|---|---|---|---|
| Daltolac XR 159 | pbw | 33 | 33 |
| Daltolac XR 144 | pbw | 30 | 30 |
| Daltolac R 130 | pbw | 31 | 31 |
| Tegostab B 8423 | pbw | 1.15 | 1.15 |
| RS 210 | pbw | 1.15 | 1.15 |
| Niax Al | pbw | 0.1 | 0.1 |
| Catalyst SFC | pbw | 4.0 | 5.0 |
| water | pbw | 2.0 | |
| cyclopentane | pbw | 24.0 | |
| MIX 7 | pbw | | 30.1 |
| Suprasec DNR | pbw | 134.29 | 134.29 |
| Core density | kg/m³ | 26.3 | 26.0 |
| Free rise density | kg/m³ | 17.5 | 16.6 |
| Overall density | kg/m² | 25.1 | 25.1 |
| CCC | % | 82 | 90 |
| Dim.Stab. ld/-20°C | | | |
| Length | % | -0.47 | -0.04 |
| Width | % | -0.22 | 0.02 |
| Thickness | % | 0.40 | 0.00 |
| Sum abs. values | | 1.09 | 0.06 |
| Dim.Stab.14d/-20°C | | | |
| Length | % | -0.31 | 0.15 |
| Width | % | -0.11 | 0.14 |
| Thickness | % | 0.85 | 0.36 |
| Sum abs. values | | 1.27 | 0.65 |
| Lambda Initial | mW/mK | 22.4 | 25.8 |
| Lambda 1 week/70°C | mW/mK | 26.9 | 28.9 |
| Lambda 3 week/70°C | mW/mK | 28.4 | 29.8 |
| Lambda 5 week/70°C | mW/mK | 29.0 | 30.8 |

### EXAMPLE 3

Construction type rigid polyurethane foams were prepared starting from the formulations indicated in Table 3 along the lines described in example 1. Of the obtained foams density, isotropic cell size, friability (according to standard BS 4370) and lambda value (initial and after 1 week, 2, 3, 4 and 5 weeks) were measured. The results are indicated in Table 3 below.

These results show that foams of the present invention which also incorporate an insoluble fluorinated compound have finer cells, improved thermal insulation properties and improved friability compared to such foams not containing an insoluble fluorinated compound.

**TABLE 3**

| Foam | | H | I | J | K | L | M |
|---|---|---|---|---|---|---|---|
| Polyol blend | | | | | | | |
| Polyol A | pbw | 100 | 100 | 100 | 100 | 100 | 100 |
| TEP | pbw | 15 | 15 | 15 | 15 | 15 | 15 |
| Tegostab B8406 | pbw | 4 | 4 | 4 | 4 | 4 | 4 |
| DMEA | pbw | 3.6 | 3.6 | 3.6 | 3.6 | 3.6 | 3.6 |
| NIAX Al | pbw | 0.13 | 0.13 | 0.13 | 0.13 | 0.13 | 0.13 |
| DABCO T45 | pbw | 2.69 | 2.69 | 2.69 | 2.69 | 2.69 | 2.69 |
| MIX 2 | pbw | 32.8 | 32.8 | 32.8 | 32.8 | 32.8 | 32.8 |
| Emulsion | | | | | | | |
| Suprasec 2085 | pbw | 100 | 99 | 98.5 | 97.5 | 96.5 | 94.5 |
| SR234 | pbw | | 0.5 | 0.5 | 0.5 | 0.5 | 0.5 |
| PFO | pbw | | 0.5 | 1 | 2 | 3 | 5 |
| Polyol blend | pbw | 29.25 | 29 | 28.85 | 28.7 | 28.5 | 28.1 |
| Emulsion | pbw | 70.75 | 71 | 71.15 | 71.3 | 71.5 | 71.9 |
| Index | | 250 | 250 | 250 | 250 | 250 | 250 |
| Density | kg/m³ | 23 | 20.8 | 20 | 21.1 | 21.1 | 21.9 |
| Cell size | µm | 350 | 239 | 211 | 215 | 190 | 175 |
| Friability | % | 15.8 | 3.9 | 0 | 1 | 1.6 | 2.1 |
| Lambda initial | mW/mK | 25 | 24 | 24 | 23.2 | 23.2 | 22.7 |
| Lambda 1 week | mW/mK | 29 | 28.1 | 27.9 | 27 | 26.8 | 26.2 |
| Lambda 2 weeks | mW/mK | 29.3 | 28.3 | 28.4 | 27.3 | 27.5 | 27 |
| Lambda 3 weeks | mW/mK | 29.6 | | | | | |
| Lambda 4 weeks | mW/mK | 30 | 28.5 | 28.5 | 27.9 | 27.5 | 27.1 |
| Lambda 5 weeks | mW/mK | 29.2 | 28.8 | 28.8 | 27.9 | 27.6 | 27.3 |

### Example 4

Construction type rigid polyurethane foams were prepared starting from the formulations indicated in Table 4 along the lines described in example 1. Of the obtained foams density and friability were measured. The results are indicated in Table 4 below.

**TABLE 4**

| | | Foam N | Foam O | Foam P | Foam Q |
|---|---|---|---|---|---|
| Polyol blend | | | | | |
| Daltolac XR144 | pbw | 4.79 | 4.79 | 4.79 | 4.79 |
| Daltolac P 744 | pbw | 3.96 | 3.96 | 3.96 | 3.96 |
| Daltorez XP805 | pbw | 3.42 | 3.42 | 3.42 | 3.42 |
| Daltolac R105 | pbw | 1.09 | 1.09 | 1.09 | 1.09 |
| SR234 TEP | pbw | 1.4 | 1.4 | 1.4 | 1.4 |
| | pbw | 3 | 3 | 3 | 3 |
| Catalyst SFC | pbw | 0.35 | 0.35 | 0.35 | 0.35 |
| Dabco T45 | pbw | 1.55 | 1.55 | 1.55 | 1.55 |
| MIX 2 | pbw | 6 | 6 | 6 | 6 |
| Emulsion | | | | | |
| Suprasec 2085 | pbw | 100 | 98.95 | 98.5 | 97 |
| SR234 | pbw | | 0.35 | 0.5 | 1 |
| PFO | pbw | | 0.7 | 1 | 2 |
| Polyol blend | pbw | 76 | 75.4 | 75.1 | 74.3 |
| Emulsion | pbw | 224 | 224.6 | 224.9 | 225.7 |
| Index | | 400 | 400 | 400 | 400 |
| Density | kg/m³ | 25.8 | 24.8 | 24.9 | 25 |
| Friability | % | 47.2 | 40.8 | 37.4 | 33.7 |

## Claims

1. Process for the preparation of a rigid polyurethane or urethane-modified polyisocyanurate foam by reaction of a polyisocyanate composition with a polyfunctional isocyanate-reactive composition under foam-forming conditions in the presence of a mixture of physical blowing agents, each of said physical blowing agents having a boiling point in the range -40°C to 80°C, characterised in that said physical blowing agent mixture comprises at least 3 components and the foam has a closed cell content of above 85 %, a core density of below 28 kg/m³ and a dimensional stability expressed as the sum of the absolute values of the relative linear changes in the three dimensions after exposure to -20°C for 14 days, of below 15 %.

2. Process according to claim 1 wherein the foam has a core density of below 27 kg/m³.

3. Process according to claim 2 wherein the foam has a core density of below 25 kg/m³.

4. Process according to any one of the preceding claims wherein the foam has a dimensional stability expressed as the sum of the absolute values of the relative linear changes in the three dimensions after exposure to -20°C for 14 days, of below 10 %.

5. Process according to claim 4 wherein the foam has a dimensional stability expressed as the sum of the absolute values of the relative linear changes in the three dimensions after exposure to -20°C for 14 days, of below 7.5 %.

6. Process according to any one of the preceding claims wherein each of said physical blowing agents has a boiling point in the range 15°C to 60°C.

7. Process according to any one of the preceding claims wherein none of said physical blowing agents contains a halogen atom.

8. Process according to any one of the preceding claims wherein at least one of said physical blowing agents has a gas thermal conductivity at the foam operational temperature lower than the gas thermal conductivity of carbon dioxide at that temperature.

9. Process according to claim 8 wherein at least one of said physical blowing agents has a gas thermal conductivity at the foam operational temperature lower than the gas thermal conductivity of n-pentane at that temperature.

10. Process according to claim 9 wherein at least one of said physical blowing agents has a gas thermal conductivity at the foam operational temperature lower than the gas thermal conductivity of cyclopentane at that temperature.

11. Process according to any one of the preceding claims wherein the sum of the gas partial pressures of all the blowing agent components is at least 3·10⁴ Pa (0.3 bar).

12. Process according to claim 11 wherein the sum of the gas partial pressures of all the blowing agent components is at least 4.5·10⁴ Pa (0.45 bar).

13. Process according to claim 12 wherein the sum of the gas partial pressures of all the blowing agent components is at least 6·10⁴ Pa (0.6 bar).

14. Process according to any one of the preceding claims wherein at the most 40 % of the physical blowing agent mixture is condensed at the foam operational temperature.

15. Process according to claim 14 wherein at the most 20 % of the physical blowing agent mixture is condensed at the foam operational temperature.

16. Process according to claim 15 wherein at the most 10 % of the physical blowing agent mixture is condensed at the foam operational temperature.

17. Process according to claim 16 wherein at the most 2 % of the physical blowing agent mixture is condensed at the foam operational temperature.

18. Process according to any one of the preceding claims wherein at least one of the components of said physical blowing agent mixture is an alkane or a cycloalkane.

19. Process according to any one of the preceding claims wherein at least one of the components of said physical blowing agent mixture is acetone.

20. Process according to claim 18 or 19 wherein said physical blowing agent mixture contains one or more (cyclo)alkanes having 5 to 6 carbon carbons, optionally acetone and optionally hydrofluorocarbon(s).

21. Process according to any one of the preceding claims wherein the reaction is carried out in the presence of water.

22. Process according to any one of the preceding claims wherein the reaction is carried out in the presence of an insoluble fluorinated compound.

23. Process according to claim 22 wherein said insoluble fluorinated compound is a substantially fluorinated or perfluorinated hydrocarbon.

24. Process according to claim 23 wherein said insoluble fluorinated compound is perfluoropentane or perfluorohexane or perfluoro(4-methylpent-2-ene).

## Patentansprüche

1. Verfahren zur Herstellung eines Polyurethan-Hartschaumstoffs oder eines urethanmodifizierten Polyisocyanurat-Hartschaumstoffs durch Umsetzung einer Polyisocyanatmischung mit einer polyfunktionellen isocyanatreaktiven Mischung unter Schaumbildungsbedingungen in Gegenwart einer Mischung aus physikalischen Treibmitteln, wobei jedes der erwähnten physikalischen Treibmittel einen Siedepunkt im Bereich von -40 °C bis 80 °C hat, dadurch gekennzeichnet, daß die erwähnte Mischung aus physikalischen Treibmitteln mindestens 3 Komponenten umfaßt und der Schaumstoff einen Gehalt an geschlossenen Zellen von mehr als 85 %, eine Kerndichte von weniger als 28 kg/m³ und eine als Summe der Absolutwerte der relativen linearen Änderungen in den drei Dimensionen nach 14tägiger Einwirkung von -20 °C ausgedrückte Dimensionsstabilität von weniger als 15 % hat.

2. Verfahren nach Anspruch 1, bei dem der Schaumstoff eine Kerndichte von weniger als 27 kg/m³ hat.

3. Verfahren nach Anspruch 2, bei dem der Schaumstoff eine Kerndichte von weniger als 25 kg/m³ hat.

4. Verfahren nach einem der vorhergehenden Ansprüche, bei dem der Schaumstoff eine als Summe der Absolutwerte der relativen linearen Änderungen in den drei Dimensionen nach 14tägiger Einwirkung von -20 °C ausgedrückte Dimensionsstabilität von weniger als 10 % hat.

5. Verfahren nach Anspruch 4, bei dem der Schaumstoff eine als Summe der Absolutwerte der relativen linearen Änderungen in den drei Dimensionen nach 14tägiger Einwirkung von -20 °C ausgedrückte Dimensionsstabilität von weniger als 7,5 % hat.

6. Verfahren nach einem der vorhergehenden Ansprüche, bei dem jedes der erwähnten physikalischen Treibmittel einen Siedepunkt im Bereich von 15 °C bis 60 °C hat.

7. Verfahren nach einem der vorhergehenden Ansprüche, bei dem keines der erwähnten physikalischen Treibmittel ein Halogenatom enthält.

8. Verfahren nach einem der vorhergehenden Ansprüche, bei dem mindestens eines der erwähnten physikalischen Treibmittel bei der Betriebstemperatur des Schaumstoffs ein Gas-Wärmeleitvermögen hat, das niedriger ist als das Gas-Wärmeleitvermögen von Kohlendioxid bei dieser Temperatur.

9. Verfahren nach Anspruch 8, bei dem mindestens eines der erwähnten physikalischen Treibmittel bei der Betriebstemperatur des Schaumstoffs ein Gas-Wärmeleitvermögen hat, das niedriger ist als das Gas-Wärmeleitvermögen von n-Pentan bei dieser Temperatur.

10. Verfahren nach Anspruch 9, bei dem mindestens eines der erwähnten physikalischen Treibmittel bei der Betriebstemperatur des Schaumstoffs ein Gas-Wärmeleitvermögen hat, das niedriger ist als das Gas-Wärmeleitvermögen von Cyclopentan bei dieser Temperatur.

11. Verfahren nach einem der vorhergehenden Ansprüche, bei dem die Summe der Gaspartialdrücke aller Treibmittelkomponenten mindestens 3·10⁴ Pa (0,3 bar) beträgt.

12. Verfahren nach Anspruch 11, bei dem die Summe der Gaspartialdrücke aller Treibmittelkomponenten mindestens 4,5·10⁴ Pa (0,45 bar) beträgt.

13. Verfahren nach Anspruch 12, bei dem die Summe der Gaspartialdrücke aller Treibmittelkomponenten mindestens 6·10⁴ Pa (0,6 bar) beträgt.

14. Verfahren nach einem der vorhergehenden Ansprüche, bei dem höchstens 40 % der Mischung aus physikalischen Treibmitteln bei der Betriebstemperatur des Schaumstoffs kondensiert werden.

15. Verfahren nach Anspruch 14, bei dem höchstens 20 % der Mischung aus physikalischen Treibmitteln bei der Betriebstemperatur des Schaumstoffs kondensiert werden.

16. Verfahren nach Anspruch 15, bei dem höchstens 10 % der Mischung aus physikalischen Treibmitteln bei der Betriebstemperatur des Schaumstoffs kondensiert werden.

17. Verfahren nach Anspruch 16, bei dem höchstens 2 % der Mischung aus physikalischen Treibmitteln bei der Betriebstemperatur des Schaumstoffs kondensiert werden.

18. Verfahren nach einem der vorhergehenden Ansprüche, bei dem mindestens eine der Komponenten der erwähnten Mischung aus physikalischen Treibmitteln ein Alkan oder ein Cycloalkan ist.

19. Verfahren nach einem der vorhergehenden Ansprüche, bei dem mindestens eine der Komponenten der erwähnten Mischung aus physikalischen Treibmitteln Aceton ist.

20. Verfahren nach Anspruch 18 oder 19, bei dem die erwähnte Mischung aus physikalischen Treibmitteln ein oder mehr als ein (Cyclo)alkan mit 5 bis 6 Kohlenstoffatomen, wahlweise Aceton und wahlweise Fluorkohlenwasserstoff(e) enthält.

21. Verfahren nach einem der vorhergehenden Ansprüche, bei dem die Umsetzung in Gegenwart von Wasser durchgeführt wird.

22. Verfahren nach einem der vorhergehenden Ansprüche, bei dem die Umsetzung in Gegenwart einer unlöslichen fluorierten Verbindung durchgeführt wird.

23. Verfahren nach Anspruch 22, bei dem die erwähnte unlösliche fluorierte Verbindung ein im wesentlichen fluorierter oder perfluorierter Kohlenwasserstoff ist.

24. Verfahren nach Anspruch 23, bei dem die erwähnte unlösliche fluorierte Verbindung Perfluorpentan oder Perfluorhexan oder Perfluor-(4-methylpent-2-en) ist.

## Revendications

1. Procédé pour la préparation d'une mousse rigide de polyuréthanne ou de polyisocyanurate à modification uréthanne par réaction d'une composition de polyisocyanate avec une composition polyfonctionnelle, réactive avec les isocyanates, dans des conditions de formation de mousse en présence d'un mélange d'agents porogènes physiques, chacun desdits agents porogènes physiques ayant un point d'ébullition compris dans l'intervalle de -40°C à 80°C, caractérisé en ce que ledit mélange d'agents porogènes physiques comprend au moins trois constituants et la mousse a une teneur en cellules fermées supérieure à 85 %, une masse volumique de noyau inférieure à 20 kg/m³ et une stabilité dimensionnelle exprimée par la somme des valeurs absolues des variations linéaires relatives dans les trois dimensions après exposition à une température de -20°C pendant 14 jours, inférieure à 15 %.

2. Procédé suivant la revendication 1, dans lequel la mousse a une masse volumique de noyau inférieure à 27 kg/m³.

3. Procédé suivant la revendication 2, dans lequel la mousse a une masse volumique de noyau inférieure à 25 kg/m³.

4. Procédé suivant l'une quelconque des revendications précédentes, dans lequel la mousse a une stabilité dimensionnelle exprimée par la somme des valeurs absolues des variations linéaires relatives dans les trois dimensions après exposition à une température de -20°C pendant 14 jours, inférieure à 10 %.

5. Procédé suivant la revendication 4, dans lequel la mousse a une stabilité dimensionnelle exprimée par la somme des valeurs absolues des variations linéaires relatives dans les trois dimensions après exposition à une température de -20°C pendant 14 jours, inférieure à 7,5 %.

6. Procédé suivant l'une quelconque des revendications précédentes, dans lequel chacun des agents porogènes physiques a un point d'ébullition compris dans l'intervalle de 15°C à 60°C.

7. Procédé suivant l'une quelconque des revendications précédentes, dans lequel aucun des agents porogènes physiques ne contient d'atomes d'halogène.

8. Procédé suivant l'une quelconque des revendications précédentes, dans lequel au moins un des agents porogènes physiques a une conductivité thermique de gaz à la température d'utilisation de la mousse inférieure à la conductivité thermique de gaz du dioxyde de carbone à cette température.

9. Procédé suivant la revendication 8, dans lequel au moins un des agents porogènes physiques a une conductivité thermique de gaz à la température d'utilisation de la mousse inférieure à la conductivité thermique de gaz du n-pentane à cette température.

10. Procédé suivant la revendication 9, dans lequel au moins un des agents porogènes physiques a une conductivité thermique de gaz à la température d'utilisation de la mousse inférieure à la conductivité thermique de gaz du cyclopentane à cette température.

11. Procédé suivant l'une quelconque des revendications précédentes, dans lequel la somme des pressions partielles de gaz de tous les constituants servant d'agents porogènes est égale à au moins 3.10⁴ Pa (0,3 bar).

12. Procédé suivant la revendication 11, dans lequel la somme des pressions partielles de gaz de tous les constituants servant d'agents porogènes est égale à au moins 4,5.10⁴ Pa (0,45 bar).

13. Procédé suivant la revendication 12, dans lequel la somme des pressions partielles de gaz de tous les constituants servant d'agents porogènes est égale à au moins 6.10⁴ Pa (0,6 bar).

14. Procédé suivant l'une quelconque des revendications précédentes, dans lequel au plus 40 % du mélange d'agents porogènes physiques sont condensés à la température d'utilisation de la mousse.

15. Procédé suivant la revendication 14, dans lequel au plus 20 % du mélange d'agents porogènes physiques sont condensés à la température d'utilisation de la mousse.

16. Procédé suivant la revendication 15, dans lequel au plus 10 % du mélange d'agents porogènes physiques sont condensés à la température d'utilisation de la mousse.

17. Procédé suivant la revendication 16, dans lequel au plus 2 % du mélange d'agents porogènes physiques sont condensés à la température d'utilisation de la mousse.

18. Procédé suivant l'une quelconque des revendications précédentes, dans lequel au moins un des constituants du mélange d'agents porogènes physiques est un alcane ou un cycloalcane.

19. Procédé suivant l'une quelconque des revendications précédentes, dans lequel au moins un des constituants du mélange d'agents porogènes physiques est l'acétone.

20. Procédé suivant la revendication 18 ou 19, dans lequel le mélange d'agents porogènes physiques contient un ou plusieurs (cyclo)alcanes ayant 5 ou 6 atomes de carbone, facultativement l'acétone et facultativement un ou plusieurs hydrofluorocarbones.

21. Procédé suivant l'une quelconque des revendications précédentes, dans lequel la réaction est conduite en présence d'eau.

22. Procédé suivant l'une quelconque des revendications précédentes, dans lequel la réaction est conduite en présence d'un composé fluoré insoluble.

23. Procédé suivant la revendication 22, dans lequel le composé fluoré insoluble est un hydrocarbure essentiellement fluoré ou perfluoré.

24. Procédé suivant la revendication 23, dans lequel le composé fluoré insoluble est le perfluoropentane ou le perfluorohexane ou bien le perfluoro(4-méthylpent-2-ène).
